# FASCICULE DE BREVET EUROPEEN

(11) **EP 1 695 604 B1**
(45) Date de publication et mention de la délivrance du brevet: **19.11.2008**
(21) Numéro de dépôt: 06290303.4
(22) Date de dépôt: 22.02.2006
(51) Int. Cl.: A01B 73/04, A01B 63/22

(54) **Machine pour le travail du sol tractée**
Gezogene Bodenbearbeitungsmaschine
Towed soil working machine

(30) Priorité: 23.02.2005 FR 0501819
(43) Date de publication de la demande: 30.08.2006
(73) Titulaire: Etablissements Gregoire Besson et Cie, 49230 Montigne sur Moine (FR)
(72) Inventeur: Hundeby, Dave, Saskatoon, SK S7K 3J7 (CA); Thirouin, Cyril, 91640 Briis Sous Forges (FR)
(74) Mandataire: Laget, Jean-Loup

(56) Documents cités:
- EP-A- 1 008 286
- US-A- 4 700 784
- US-A- 4 974 684
- US-B1- 6 220 366

## Description

La présente invention concerne une machine de travail du sol tractée, notamment pour le travail de grande largeur, du type comprenant un châssis porte-outils formé d'au moins une section centrale et deux sections latérales, sections latérales et section centrale étant articulées entre elles pour occuper deux positions principales, l'une de travail dans laquelle la section centrale et les sections latérales sont sensiblement alignées, l'autre de faible encombrement, notamment pour le transport sur route, dans laquelle les sections latérales s'étendent verticalement, sensiblement à angle droit de la section centrale, les mouvements relatifs entre lesdites sections étant obtenus par l'intermédiaire de vérins, dits de repliage, lesdites sections étant chacune équipée de roues au moins pour certaines escamotables, ces roues servant notamment au réglage du terrage des outils et à leur dégagement nécessité par des manoeuvres notamment en bout de champ, les roues de la section centrale servant en outre au transport routier de ladite machine, l'escamotage et la sortie des roues étant commandés par l'intermédiaire de vérins dits de relevage.

La concentration ou le regroupement des exploitations agricoles associés à une augmentation des caractéristiques techniques des tracteurs (puissance, adhérence) crée une demande pour des châssis porte-outils à dents, à disques, à socs ou à semoirs de plus en plus larges.

Ces machines sont constituées de trois à cinq sections reliées les unes aux autres par des charnières. Chaque section constitue une armature supportant les pièces (dents, disques, socs ou semoirs) travaillant ou traitant le sol. De cette façon, la structure flexible permet un meilleur suivi du terrain quand la machine travaille dans des champs qui ne sont pas parfaitement plans. Généralement, cette structure flexible sert aussi pour replier la machine en mode transport. Afin d'assurer un contrôle de profondeur de chaque section, ces dernières sont généralement associées à un dispositif de relevage (roue ou rouleau) permettant de déterminer la position dans le sol des pièces travaillantes. Ce dispositif de relevage est formé par exemple par une roue ou un rouleau relié au châssis par un bras pivotant entraîné en déplacement par l'intermédiaire d'un vérin qui commande la sortie ou la rentrée de la roue. Lors des demi-tours en bout de champ, les pièces travaillant le sol sont sorties de terre par le dispositif de relevage qui assure, en sus du terrage ou réglage de profondeur des outils dans le sol, le dégagement de ces derniers. Lors du transport, en position repliée de la machine, au moins certaines des roues se trouvant sur la section centrale sont également utilisées pour soutenir par appui roulant l'ensemble.

Pour contrôler les fonctions hydrauliques de relevage et de repliage, ces machines disposent de deux circuits hydrauliques indépendants reliés au distributeur hydraulique ou électro-hydraulique du tracteur. Jusqu'à présent, le repliage du châssis s'effectue soit sans escamotage des roues des sections latérales qui font alors latéralement saillie du châssis en position repliée de ce dernier, soit avec un escamotage manuel des roues commandé par l'opérateur qui doit, à chaque phase de repli, descendre de son tracteur pour actionner des vannes ou, depuis la cabine de son tracteur, manipuler un organe de commande marquant les différentes séquences. Outre le temps perdu, une erreur dans la manipulation des vannes ne peut être exclue au risque d'endommager ensuite les outils du châssis. Une telle solution est décrite dans le brevet US-4.700.784 où il est prévu plusieurs valves qui permettent, après actionnement par l'opérateur suivant un ordre prédéterminé, de relever la barre d'outils, de pivoter les sections latérales pour les amener en position verticale et de rapprocher les roues des sections latérales.

Une autre solution non satisfaisante consiste à multiplier le nombre de distributeurs hydrauliques et à disposer de plus de deux circuits, ce qui complique l'ensemble.

Une autre solution décrite dans le brevet US-B-6220366 consiste à intégrer une unité de pilotage dans la machine. Cette unité de pilotage reçoit, de capteurs de détection installés sur la machine, des signaux de position des sections latérales, à partir desquels l'unité de commande la rétractation des roues. Cette rétractation des roues s'opère avant que les sections latérales n'atteignent la position de transport pour empêcher une interférence, notamment des roues, dans la position de transport. Le circuit des vérins de relevage et le circuit des vérins de repliage constituent donc à nouveau deux circuits indépendants commandés en fonctionnement par une même unité de pilotage.

Un but de la présente invention est donc de proposer une machine dont l'escamotage des roues s'opère de manière sûre et à faible coût, cet escamotage participant au respect du gabarit routier tout en autorisant un travail sur de grandes largeurs.

Un autre but de la présente invention est de proposer une machine dont la conception peut permettre de s'affranchir de capteurs de position.

A cet effet, l'invention a pour objet une machine de travail du sol tractée, notamment pour le travail ou le traitement de grande largeur de terrain, du type comprenant un châssis porte-outils formé d'au moins une section centrale et deux sections latérales, sections latérales et section centrale étant articulées entre elles pour occuper deux positions principales, l'une de travail dans laquelle la section centrale et les sections latérales sont sensiblement alignées, l'autre de faible encombrement, notamment pour le transport sur route, dans laquelle les sections latérales s'étendent verticalement, sensiblement à angle droit de la section centrale, les mouvements relatifs entre lesdites sections étant obtenus par l'intermédiaire de vérins, dits de repliage, lesdites sections étant chacune équipée de roues au moins pour certaines escamotables, ces roues servant notamment au réglage du terrage des outils et à leur dégagement nécessité par des manoeuvres notamment en bout de champ, les roues de la section centrale servant en outre au transport routier de ladite machine, l'escamotage et la sortie des roues étant commandés par l'intermédiaire de vérins dits de relevage, caractérisée en ce qu'elle comporte un circuit de relevage alimentant les vérins de relevage et un circuit de repliage alimentant les vérins de repliage lesdits circuits communiquant automatiquement entre eux lorsque la section latérale et la section centrale occupent une position relative correspondant à un repliage partiel dudit châssis afin que le fluide du circuit de repliage s'écoule dans le circuit de relevage pour permettre l'escamotage des roues des sections latérales, au cours du repliement du châssis ou une sortie desdites roues des sections au cours du déploiement du châssis, tandis que toute communication entre les circuits est empêchée en position de travail.

Dans une telle conception, les circuits de relevage et de repliage sont donc équipés de moyens, en particulier d'organes d'obturation dont le fonctionnement, en particulier l'ouverture ou la fermeture, est asservi à la position relative des sections latérales et centrale du châssis entre elles, de manière à permettre une mise en communication automatique des circuits entre eux et autoriser, parallèlement au repliement du châssis, un escamotage dans le sens d'une rentrée des roues ou respectivement, parallèlement au déploiement du châssis, une sortie desdites roues. En effet, les circuits comportent, pour leur mise en communication, au moins un, de préférence deux organes d'obturation commandés automatiquement en ouverture/fermeture en fonction de la position relative des sections latérales et centrale. Ainsi, le fluide du circuit de repliage est apte à s'écouler dans le circuit de relevage pour permettre automatiquement, lors du repliage, un escamotage des roues. De ce fait, une unité centrale de pilotage n'est pas nécessaire. Il en résulte une simplification de la machine dépourvue de systèmes électriques et d'électronique lourde.

L'invention sera bien comprise à la lecture de la description suivante d'exemples de réalisation, en référence aux dessins annexés dans lesquels :
la figure 1 représente une vue de dessus d'une machine de travail du sol attelée à un véhicule tracteur conforme à l'invention ;
la figure 2 représente une vue arrière du châssis dans une position de manoeuvre en bout de champ de ladite machine ;
la figure 3 représente une vue arrière dudit châssis dans une position de plus faible encombrement ;
la figure 4 représente une vue arrière de la moitié d'un châssis en position de travail, les vérins de relevage et de repliage ayant été représentés ;
la figure 5 représente une vue schématique partielle de la liaison entre la section centrale et une section latérale en position de travail desdites sections ;
la figure 6 représente une vue schématique partielle de la section centrale et de la section latérale en position de transport sur route de ladite section latérale, les vannes équipant lesdits circuits ayant été commandées à l'ouverture et

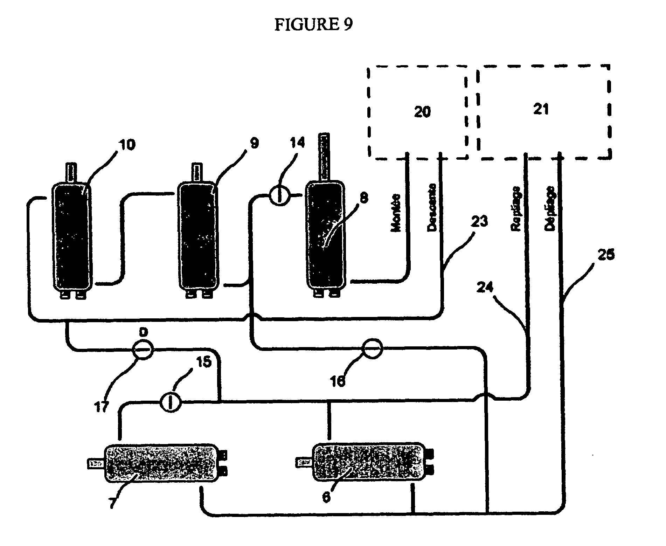

les figures 7 à 9 représentent, sous forme de représentations schématiques, les circuits de relevage et de repliage de la machine respectivement en position travail du châssis, en position de repliement du châssis et en position repliée du châssis.

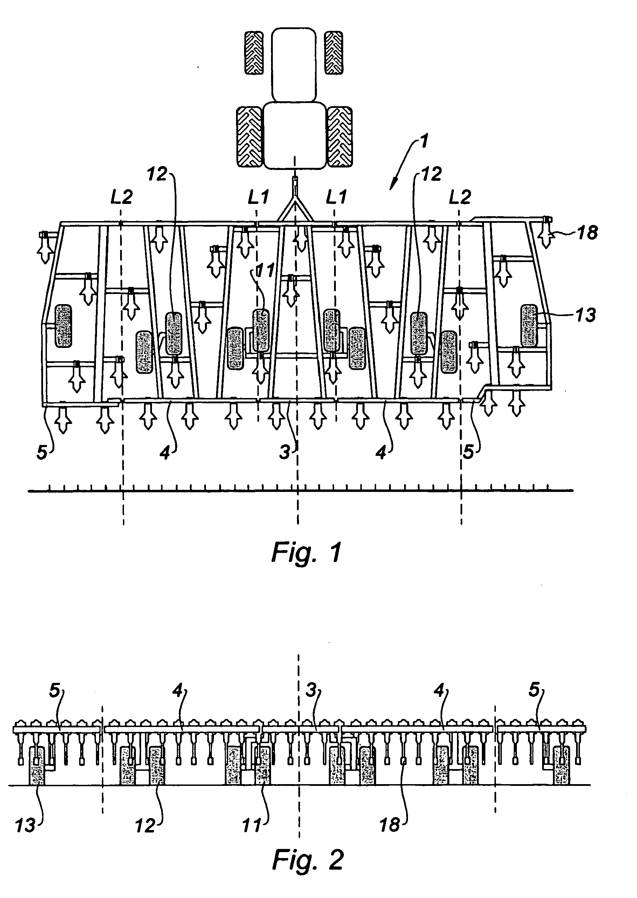

Comme mentionné ci-dessus, la machine 1 de travail du sol, objet de l'invention, est une machine destinée à être attelée à un véhicule tracteur. Cette machine 1 est plus particulièrement destinée à permettre un travail ou un traitement sur une grande largeur de terrain. Cette machine 1 comporte, de manière en soi connue, un châssis 2 porte-outils 18. Les outils 18 peuvent indifféremment être constitués de dents, de disques, de socs, d'éléments semeurs ou autres. Ce châssis 2 est formé d'au moins une section 3 centrale et deux sections 4 latérales. Dans les exemples représentés, le châssis comporte quatre sections latérales 4, 5 disposées de part et d'autre de la section 3 centrale. Les sections 4 latérales, dites médianes, qui sont articulées à la section 3 centrale par l'intermédiaire de liaison 22 charnière ou pivot appropriée, sont représentées en 4 aux figures tandis que les sections 5 latérales, dites d'extrémité, articulées aux sections 4 latérales, à nouveau par des liaisons charnière ou pivot, sont représentées en 5 aux figures. Ainsi, les sections 5 latérales d'extrémité sont amenées à être entraînées à pivotement autour d'un axe L2 parallèle à l'axe d'avancement du châssis comme l'illustre la figure 1 tandis que les sections 4 latérales médianes sont amenées à être entraînées en pivotement autour d'une ligne parallèle à l'axe d'avancement du châssis représentée en L1 aux figures. Sections 4, 5 latérales et section 3 centrale sont ainsi aptes à occuper deux positions principales, l'une de travail, conforme à celle représentée à la figure 2, dans laquelle la section 3 centrale, les sections 4 latérales médianes et les sections 5 latérales d'extrémité sont sensiblement alignées, l'autre de faible encombrement, notamment pour le transport sur route, dans laquelle les sections 4 latérales médianes et les sections 5 latérales d'extrémité s'étendent verticalement, sensiblement à angle droit de la section 3 centrale. Les sections 4, 5 latérales sont positionnées par paire avec leurs outils se faisant face. Chaque section 4, 5 latérale est globalement formée d'au moins un bâti de type poutre(s) portant des outils 18 décalés axialement dans le sens avant-arrière pris dans le sens de déplacement de la machine pour délimiter une pluralité de rangées d'outils 18, lesdites sections 4, 5 latérales étant positionnées par paire avec leurs outils se faisant face, les poutres des sections latérales dont les outils se font face étant, en position repliée de la machine, écartées l'une de l'autre d'une distance supérieure à la hauteur d'un outil mais inférieure à deux fois la hauteur d'un outil, les outils d'une section latérale étant insérés dans des espaces libres séparant les outils de l'autre section latérale leur faisant face. Les outils 18 d'une section latérale médiane ou d'extrémité sont décalés axialement dans le sens avant-arrière pris dans le sens de déplacement de la machine pour délimiter une pluralité de rangées d'outils. Les outils 18 d'une rangée d'une section latérale sont, en position repliée de la machine, soit logés dans l'espace laissé libre entre les outils 18 d'une rangée d'une autre section latérale en vue d'un chevauchement par superposition desdits outils 18, soit logés dans l'espace laissé libre entre deux rangées d'outils d'une autre section latérale en vue d'un chevauchement par juxtaposition desdits outils 18. Dans le mode de réalisation représenté, ce sont les sections 5 latérales d'extrémité qui sont positionnées avec leurs outils 18 se faisant face et qui se chevauchent par juxtaposition ou superposition en position de transport de la machine. Dans ce cas, par exemple chaque section 3, 4, 5 est constituée globalement d'une poutre porte-outils 18, les poutres des sections 5 latérales d'extrémité étant, dans leur position verticale de faible encombrement, écartées l'une de l'autre d'une distance supérieure à la hauteur d'un outil mais inférieure à deux fois la hauteur d'un outil, de sorte que dans la position repliée de transport de la machine, les outils 18 d'une section latérale d'extrémité 5 sont, vus de l'arrière de la machine, insérés entre les outils 18 de l'autre section latérale d'extrémité 5.

Dans un autre mode de réalisation non représenté, ce sont les sections 5 latérales d'extrémité et médiane 4, articulées l'une à l'autre, qui sont positionnées avec leurs outils se faisant face.

Indépendamment du mode de réalisation retenu, la zone de chevauchement des outils s'étend généralement sur au moins un tiers de la hauteur de l'outil. Chaque outil est de préférence un outil de pénétration dans le sol constitué à chaque fois au moins d'un étançon et d'une pièce d'usure telle que soc, lame, coutre, dent ou disques. Ces outils peuvent également avoir la fonction de semis. Il doit être noté que la section 3 centrale peut indifféremment être équipée ou dépourvue d'outils 18.

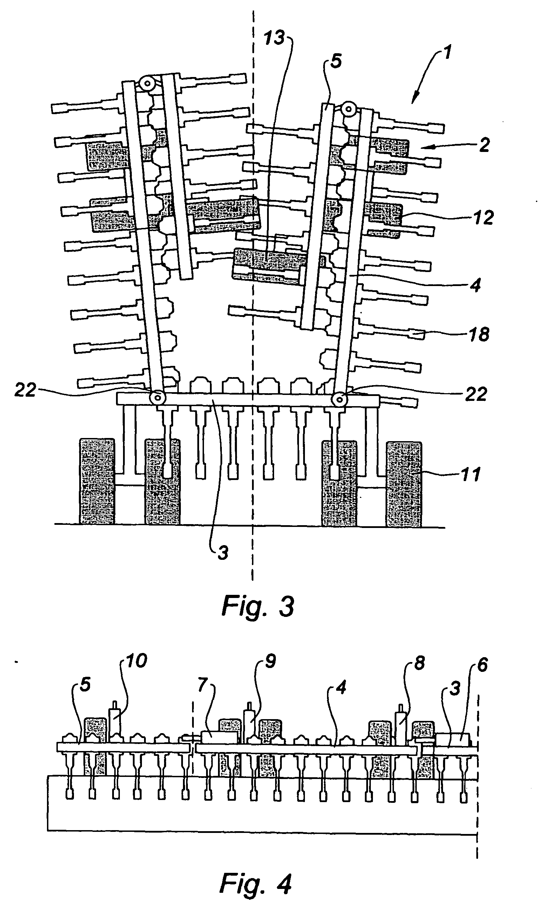

Les mouvements relatifs entre lesdites sections 3, 4, 5 sont obtenus par l'intermédiaire de vérins 6, 7. La machine comporte en effet une première série de vérins, dits de repliage, représentés en 6 et 7 à la figure 4. Le vérin 6 relie la section 3 centrale et la section 4 latérale articulée à la section 3 centrale. Le vérin 7 relie la section 4 latérale à la section 5 d'extrémité. Le vérin 7 permet ainsi, dans un premier temps, le repliement de la section 5 d'extrémité par pivotement de 180° autour d'une ligne L2 parallèle à l'axe de l'avancement de la machine pour permettre son positionnement sensiblement parallèlement et au-dessus de la section 4 latérale. Ceci constitue la première phase de repliage. Dans une seconde phase de repliage, le vérin 6 agit sur la section 4 latérale et entraîne en pivotement sur environ 90° cette dernière autour d'un axe L1 sensiblement parallèle à l'axe d'avancement du châssis pour positionner les sections 4 et 5 sensiblement à angle droit de la section 3 centrale comme cela est illustré à la figure 3.

Les sections 3, 4, 5 sont en outre chacune équipées de roues 11, 12, 13 dont au moins certaines sont escamotables. Ainsi, la section 3 centrale est équipée de roues représentées en 11 aux figures. Ces roues 11 peuvent être escamotables pour servir à la fois au transport sur route ou de roues de terrage en position de travail de la machine. L'escamotage de ces roues 11 est obtenu par l'intermédiaire d'un vérin de relevage, représenté en 8 aux figures. Les sections 4 latérales sont quant à elles équipées également de roues 12 escamotables, l'escamotage étant obtenu par un vérin représenté en 9 aux figures. Enfin, les sections 5 d'extrémité sont équipées de roues 13 escamotables, l'escamotage étant obtenu par l'intermédiaire d'un vérin 10 de relevage. La possibilité d'escamoter les roues permet de régler le terrage des outils 18. Les vérins 8, 9, 10 de relevage agissent généralement sur un bras pivotant reliant une roue ou une paire de roues au châssis. Ainsi, en position de travail de la machine, en fonction de la rentrée ou de la sortie des roues, se traduisant par un écartement plus ou moins important des roues par rapport au châssis porte-outil, on obtient un réglage de la profondeur de travail du sol des outils 18 portés par le châssis 2. En bout de champ, il est nécessaire de sortir les outils du sol. Les roues sont alors entraînées en déplacement dans une position sortie pour permettre le dégagement des outils et leur positionnement au-dessus du sol. Une fois les manoeuvres en bout de champ effectuées, les roues sont de nouveau abaissées ou rentrées pour permettre la rentrée des outils dans le sol à une profondeur prédéterminée. Les roues 11 équipant la section 3 centrale servent en outre en position de transport de la machine et forment alors des roues équivalentes à celles d'une remorque.

De manière caractéristique à l'invention, les vérins 9 de relevage des sections 4 latérales médianes et éventuellement les vérins 10 de relevage des sections 5 latérales d'extrémité d'une part et les vérins 6 de repliage et éventuellement les vérins 7 de repliage d'autre part sont alimentés en fluide par deux circuits indépendants. Ces circuits sont mis en communication automatiquement lorsque la section 4 latérale et la section 3 centrale occupent une position relative correspondant à un repliage partiel dudit châssis 2. Cette mise en communication permet de provoquer, au cours de la poursuite du repliement, l'escamotage des roues 12 des sections 4 latérales parallèlement au repliement du châssis. Cette mise en communication, qui se traduit par le passage de fluide, en l'occurrence d'huile, d'un circuit à un autre, permet, de manière parallèle, lors du déploiement ou dépliage du châssis 2, de provoquer une sortie des roues parallèlement au déploiement dudit châssis. Grâce au fait que la mise en communication des deux circuits s'opère de manière automatique, sans intervention d'un opérateur, les risques d'erreur de manipulation sont exclus.

Parallèlement à la mise en communication automatique des deux circuits, il est prévu que le vérin 8 de relevage des roues 11 de la section 3 centrale soit relié au reste du circuit de relevage par l'intermédiaire d'une liaison 14 obturable pour isoler ledit vérin 8 des autres vérins 9, 10 de relevage lors des phases de repliement du châssis 2 au-delà d'une position prédéterminée ou respectivement, lors des phases de déploiement dudit châssis, jusqu'à une position prédéterminée. Simultanément, une liaison 15 obturable est commandée pour isoler le vérin 7 de repliage de la section 5 d'extrémité lorsque le repliage de cette section 5 est terminé, de façon à assurer le maintien stable de la section d'extrémité, en position de transport. La commande simultanée des liaisons obturables 14 et 15, à l'ouverture durant la phase de déploiement du châssis, et à la fermeture durant la phase de repliement du châssis, est assurée par des moyens mécaniques, automatiques, comme il va être décrit pour les vannes 16 et 17.

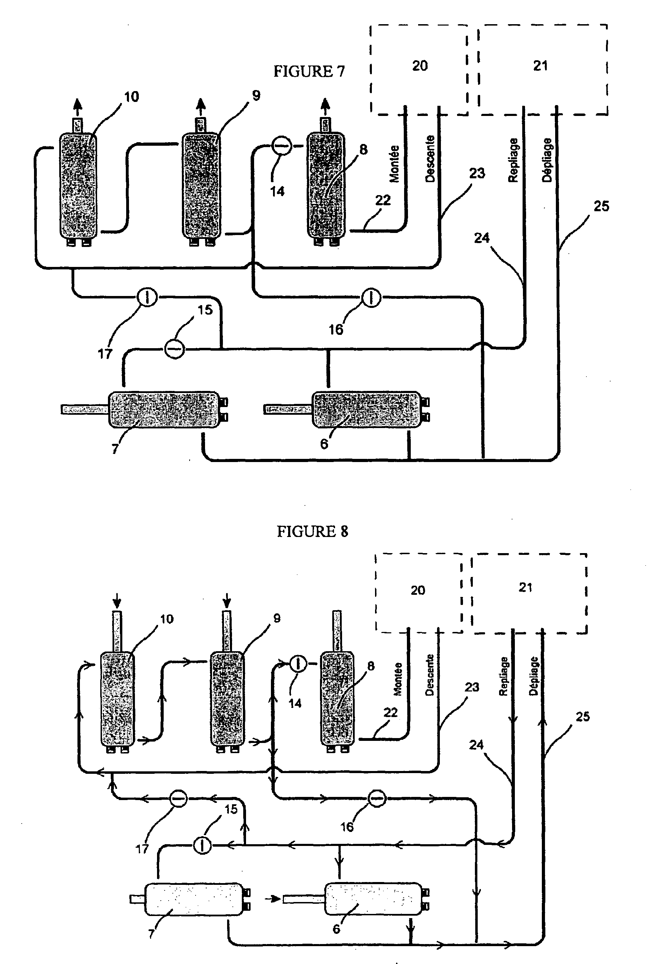

La mise en communication entre les deux circuits est obtenue par l'intermédiaire de vannes 16, 17 commandées automatiquement en ouverture durant la phase de repliement du châssis et respectivement en fermeture durant la phase de déploiement du châssis 2. Ainsi, les circuits comportent au moins deux organes 16, 17 d'obturation positionnés, pour l'un, représenté en 17, sur le circuit de dérivation entre le circuit de relevage et le circuit de repliage, pour l'autre, représenté en 16 aux figures, sur une ligne de dérivation entre la branche d'alimentation du vérin 8 de relevage de la section 3 centrale et la branche du retour au distributeur 21 du circuit de repliage. Dans le détail, le circuit de relevage est constitué d'un distributeur 20 double effet équipant généralement le tracteur et de deux conduites 22, 23 reliant les sorties du distributeur avec les chambres des vérins 8, 9, 10 de relevage pour permettre, lors de l'alimentation de la conduite 22, une sortie des vérins, et lors de l'alimentation de la conduite 23, une rentrée des vérins pour permettre la sortie et la rentrée des roues. Le circuit de repliage comporte, de manière similaire, un distributeur 21 à deux sorties et deux conduites 24, 25 reliant les vérins 6, 7 de repliage. La conduite 24 reliant une première chambres des vérins 6, 7 permet le repliage du châssis tandis que la conduite 25, reliant une seconde chambre des vérins 6, 7 au distributeur, permet un dépliage de la structure du châssis. En position de travail au sol du châssis, c'est-à-dire dans une position où l'ensemble des sections sont alignées, le circuit est conforme à celui représenté à la figure 7. Les vannes 16 et 17 sont donc fermées pour empêcher toute communication desdits circuits entre eux. La vanne 14, positionnée sur le circuit de relevage et qui permet l'alimentation ou l'isolement du vérin 8 de relevage de la section centrale, est également ouverte. La vanne 15, positionnée sur la conduite 24 du circuit de repliage et permettant ou empêchant l'alimentation du vérin 7 de repliage de la section d'extrémité, est également ouverte. Il doit être noté que dans les schémas, un trait horizontal correspond à une vanne ouverte tandis qu'un trait vertical correspond à une vanne fermée. Ainsi, les vannes 14 et 15 d'une part, et les vannes 16 et 17 d'autre part, sont commandées automatiquement et simultanément, les premières étant ouvertes quand les secondes sont fermées, et inversement.

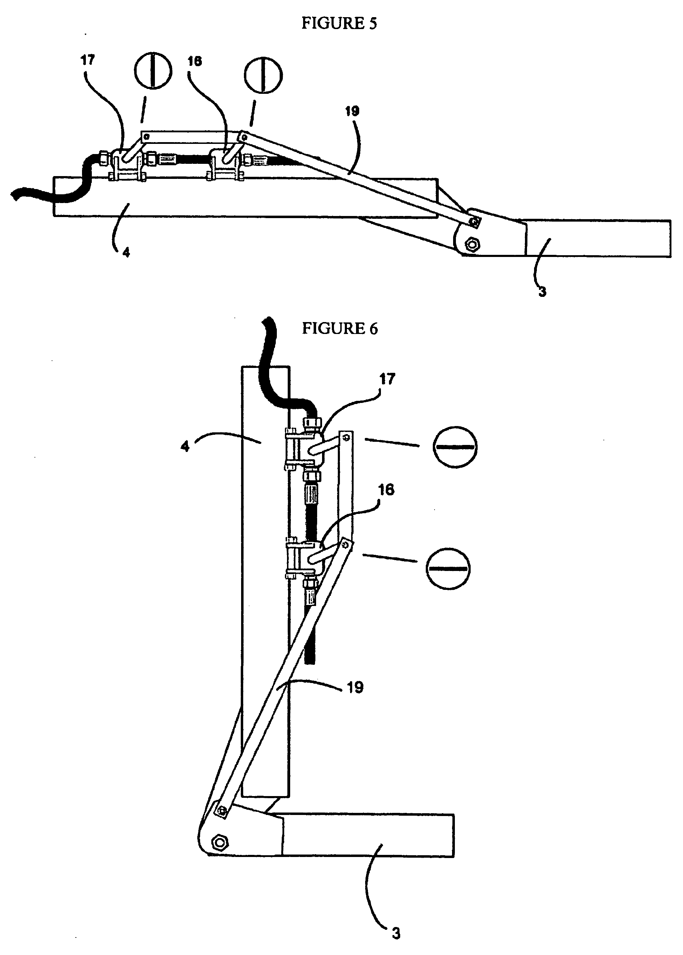

Dans un premier temps, le circuit de repliage, en particulier la conduite 24 du circuit, est alimenté pour permettre le repli de la section 5 d'extrémité et son positionnement parallèlement et au-dessus de la section 4 latérale. Dans ce cas, seules les branches 24 et 25 sont alimentées en fluide, la vanne 15 étant ouverte pour alimenter le vérin 7 de repliage de la section 5 d'extrémité. Une fois cette phase terminée, la phase de repliage de la section 4 latérale par pivotement autour de son axe d'articulation à la section 3 centrale est entamée. Tant que la section 4 latérale n'a pas atteint une position prédéterminée, les vannes restent dans une position conforme à celle représentée à la figure 7. Dès que la section 4 latérale dépasse, au cours de son repliement, une position prédéterminée, les vannes 16 et 17 s'ouvrent tandis que la vanne 15 se ferme. Ainsi, l'ouverture des vannes 16 et 17 permet la mise en communication des circuits de relevage et de repliage. La fermeture de la vanne 15 empêche toute alimentation du vérin 7 de repliage de la section d'extrémité. La vanne 14 est également fermée. Elle empêche toute alimentation du vérin 8 de relevage de la section 3 centrale et permet ainsi d'isoler ce vérin de manière à maintenir les roues de la section centrale dans une position sortie correspondant à la position de transport de la machine. L'alimentation en fluide issu du circuit de repliage des vérins 9 et 10 de relevage provoque, parallèlement à la poursuite du repliement obtenu par l'alimentation du vérin 6 de repliage, une rentrée des roues pour permettre aux roues d'occuper une position conforme à celle représentée à la figure 3. Ainsi, c'est le fluide issu du circuit de repliage qui provoque, par alimentation des vérins 9 et 10 de relevage, une rétraction des tiges des vérins 9 et 10 de relevage et, par suite, un escamotage ou une rentrée des roues. Cette mise en communication permet donc de rentrer les roues connectées aux vérins 9 et 10. Il en résulte une simplification de la machine puisqu'il n'est pas nécessaire de faire appel à des capteurs de position, des signaux électriques ou des commandes électroniques. Le circuit est maintenu dans la position représentée à la figure 8 jusqu'à repliement total du châssis. Lors de la phase de déploiement du châssis, les déplacements inverses des vannes sont observés lorsque la section latérale du châssis occupe par rapport à la section centrale une position relative prédéterminée. Le passage de la position fermée à la position ouverte des vannes ou inversement peut être obtenu de diverses manières. Dans un mode de réalisation préféré conforme à celui représenté, dans l'ensemble formé de deux sections contiguës, l'une 4, latérale, l'autre 3, centrale, animées d'une déplacement relatif, l'une 4 des sections 3, 4 est équipée d'organe d'ouverture/fermeture des organes 16, 17 d'obturation assurant la mise en communication des circuits de relevage et de repliage entre eux, tandis que l'autre section 3 est équipée d'au moins un organe mécanique, tel qu'un bras 19, un pousseur, agissant mécaniquement, généralement par poussée ou traction, sur lesdits organes d'ouverture/fermeture des organes 16, 17 d'obturation au cours du déplacement relatif desdites sections 3, 4. Dans le mode de réalisation décrit, le passage de la position fermée à la position ouverte des vannes ou inversement peut être obtenu à l'aide d'un dispositif conforme à celui représenté aux figures 5 et 6. Dans ce cas, il est prévu un bras 19 de liaison entre la section 3 centrale et la section 4 latérale. Ce bras est couplé aux organes d'ouverture et de fermeture des vannes représentées ici en 16 et 17. Lors d'un entraînement en pivotement de la section 4, le bras agit sur les organes d'ouverture ou respectivement de fermeture des vannes 16 et 17 portées par la section 4 latérale pour commander soit leur ouverture, soit leur fermeture en fonction de la position relative occupée par la section 3 centrale et les sections 4 latérales. Ce bras pourrait être remplacé de manière équivalente par un élément pousseur. Suivant les besoins de la fonction hydraulique, deux types d'éléments pousseur sont utilisés. Le premier type ouvre le circuit hydraulique quand le poussoir est enfoncé. A l'inverse, le deuxième type ferme le circuit hydraulique quand le poussoir est enfoncé. Les pousseurs peuvent être remplacés par des mécanismes agissant tout aussi bien en traction ou en rotation.

Bien évidemment, d'autres moyens de commande automatique peuvent être utilisés pour permettre le passage des vannes du circuit d'une position fermée à une position ouverte ou inversement. Il peut ainsi être prévu un détecteur de position ou un contacteur qui, lorsque la section 4 latérale occupe une position prédéterminée par rapport à la section 3 centrale, commande l'ouverture ou respectivement la fermeture des vannes. Cette solution est toutefois plus complexe. Bien que dans l'exemple de réalisation mentionné ci-dessus, la machine ait été représentée avec une section 3 centrale, deux sections 4 latérales et deux sections 5 d'extrémité, l'invention s'applique, de manière analogue, à une machine qui comporterait uniquement une section 3 centrale et deux sections 4 latérales, la section centrale étant indifféremment équipée ou dépourvue d'outils.

## Revendications

1. Machine (1) de travail du sol tractée, notamment pour le travail ou le traitement de grande largeur de terrain, du type comprenant un châssis (2) porte-outils (18) formé d'au moins une section (3) centrale et deux sections (4) latérales, sections (4) latérales et section (3) centrale étant articulées entre elles pour occuper deux positions principales, l'une de travail dans laquelle la section (3) centrale et les sections (4) latérales sont sensiblement alignées, l'autre de faible encombrement, notamment pour le transport sur route, dans laquelle les sections (4) latérales s'étendent verticalement, sensiblement à angle droit de la section (3) centrale, les mouvements relatifs entre lesdites sections (3, 4) étant obtenus par l'intermédiaire de vérins (6), dits de repliage, lesdites sections (3, 4) étant chacune équipée de roues (11, 12) au moins pour certaines escamotables, ces roues (11, 12) servant notamment au réglage du terrage des outils (18) et à leur dégagement nécessité par des manoeuvres notamment en bout de champ, les roues (11) de la section (3) centrale servant en outre au transport routier de ladite machine, l'escamotage et la sortie des roues (11, 12) étant commandés par l'intermédiaire de vérins (8, 9) dits de relevage,
**caractérisée en ce qu'**elle comporte un circuit de relevage alimentant les vérins (8,9) de relevage et un circuit de repliage alimentant les vérins (6) de repliage lesdits circuits communiquant automatiquement entre eux lorsque la section (4) latérale et la section (3) centrale occupent une position relative correspondant à un repliage partiel dudit châssis (2) afin que le fluide du circuit de repliage s'écoule dans le circuit de relevage pour permettre l'escamotage des roues (12) des sections (4) latérales au cours du repliement du châssis (2) ou une sortie desdites roues (12) des sections (4) au cours du déploiement du châssis (2), tandis que toute communication entre lesdits circuits de repliage et de relevage est empêchée en position de travail.

2. Machine (1) de travail du sol selon la revendication 1,
**caractérisée en ce que** le vérin (8) de relevage des roues (11) de la section (3) centrale est relié au reste du circuit par l'intermédiaire d'une liaison (14) obturable pour isoler ledit vérin (8) des autres vérins (9, 10) de relevage lors des phases de repliement du châssis (2).

3. Machine de travail du sol selon la revendication 1,
**caractérisée en ce que** les circuits comportent, pour leur mise en communication, au moins un, de préférence deux organes (16, 17) d'obturation commandés automatiquement en ouverture/fermeture en fonction de la position relative des sections latérales et centrale.

4. Machine (1) de travail du sol selon la revendication 3,
**caractérisée en ce que** la mise en communication entre les deux circuits est obtenue par l'intermédiaire de vannes (16, 17) commandées automatiquement en ouverture durant la phase de repliement du châssis.

5. Machine de travail du sol selon la revendication 3,
**caractérisé en ce que** les organes (16, 17) d'obturation sont positionnés, pour l'un (17) sur le circuit de dérivation entre le circuit de relevage et le circuit de repliage, pour l'autre (16) sur une ligne de dérivation entre la branche d'alimentation du vérin (8) de relevage de la section (3) centrale et la branche du retour au distributeur (21) du circuit de repliage.

6. Machine de travail du sol selon la revendication 4,
**caractérisée en ce que**, dans l'ensemble formé de deux sections contiguës, l'une (4), latérale, l'autre (3), centrale, animées d'une déplacement relatif, l'une (4) des sections (3, 4) est équipée d'organe d'ouverture/fermeture des organes (16, 17) d'obturation assurant la mise en communication des circuits de relevage et de repliage entre eux, tandis que l'autre section (3) est équipée d'au moins un organe mécanique, tel qu'un bras (19), un pousseur, agissant mécaniquement, généralement par poussée ou traction, sur lesdits organes d'ouverture/fermeture des organes (16, 17) d'obturation au cours du déplacement relatif desdites sections (3, 4).

7. Machine de travail du sol selon l'une des revendications 1 à 6,
**caractérisée en ce que** le châssis comporte au moins quatre sections latérales (4, 5) disposées de part et d'autre de la section (3) centrale, les sections (5) latérales, dites d'extrémité, étant articulées aux sections (4) latérales, dites médianes, elles-mêmes articulées à la section (3) centrale.

8. Machine de travail du sol selon la revendication 7,
**caractérisée en ce que** les sections (4, 5) latérales et la section centrale (3) sont aptes à occuper deux positions principales, l'une de travail dans laquelle la section (3) centrale, les sections (4) latérales médianes et les sections (5) latérales d'extrémité sont sensiblement alignées, l'autre de faible encombrement, notamment pour le transport sur route, dans laquelle les sections (4) latérales médianes et les sections (5) latérales d'extrémité s'étendent verticalement, sensiblement à angle droit de la section (3) centrale.

9. Machine de travail du sol selon la revendication 8,
**caractérisée** chaque section (4, 5) latérale est formée d'au moins un bâti de type poutre(s) portant des outils (18) décalés axialement dans le sens avant-arrière pris dans le sens de déplacement de la machine pour délimiter une pluralité de rangées d'outils (18), lesdites sections (4, 5) latérales étant positionnées par paire avec leurs outils se faisant face, les poutres des sections latérales dont les outils se font face étant, en position repliée de la machine, écartées l'une de l'autre d'une distance supérieure à la hauteur d'un outil mais inférieure à deux fois la hauteur d'un outil, les outils d'une section latérale étant insérés dans des espaces libres séparant les outils de l'autre section latérale leur faisant face.

10. Machine de travail du sol selon la revendication 9,
**caractérisée en ce que** les sections (5) latérales d'extrémité sont positionnées avec leurs outils (18) se faisant face et se chevauchent soit par juxtaposition, soit par superposition en position de transport de la machine.

11. Machine de travail du sol selon la revendication 9,
**caractérisée en ce que** les sections (5) latérales d'extrémité et médiane (4), articulées l'une à l'autre, sont positionnées avec leurs outils se faisant face, lesdits outils se chevauchant soit par juxtaposition, soit par superposition en position de transport de la machine.

## Claims

1. Towed soil working machine (1), in particular for working or treating a large ground width, of the type including a chassis (2) carrying implements (18), said chassis (2) being formed by at least one central section (3) and two lateral sections (4), the lateral sections (4) and central section (3) being hinged together to occupy two principal positions, one a working position, wherein the central section (3) and the lateral sections (4) are substantially aligned, and the other a space-saver position designed in particular to facilitate transport by road, wherein the lateral sections (4) extend vertically, substantially at right angles to the central section (3), the relative movements between said sections (3, 4) being obtained by means of cylinders (6) termed folding cylinders, said sections (3, 4) each being fitted with wheels (11, 12) at least some of which are retractable, these wheels (11, 12) serving in particular to adjust the ground position of the implements (18) and to ensure the required clearance thereof when manoeuvering particularly at the field end, the wheels (11) of the central section (3) additionally serving for road transportation of said machine, the retraction and deployment of the wheels (11, 12) being controlled by means of retraction cylinders (8, 9),
**characterised in that** it includes a retraction circuit feeding the retraction cylinders (8, 9) and a folding circuit feeding the folding cylinders (6), said circuits intercommunicating automatically when the lateral section (4) and the central section (3) occupy a relative position corresponding to partial folding of said chassis (2), so that the fluid from the folding circuit flows into the retraction circuit to allow retraction of the wheels (12) of the lateral sections (4) during folding of the chassis (2) or deployment of the said wheels (12) of the sections (4) during extension of the chassis (2), while any communication between said folding and retraction circuits is prevented in the working position.

2. Soil working machine (1) according to Claim 1 **characterised in that** the retraction cylinder (8) controlling the wheels (11) of the central section (3) is connected to the rest of the circuit via a closable connection (14) to isolate said cylinder (8) from the other retraction cylinders (9, 10) during the folding phases of the chassis (2).

3. Soil working machine according to Claim 1 **characterised in that**, to facilitate intercommunication of the circuits, said circuits include at least one and preferably two closure devices (16, 17) controlled so as to automatically open/close in relation to the relative position of the lateral and central sections.

4. Soil working machine (1) according to Claim 3 **characterised in that** intercommunication between the two circuits is obtained by means of valves (16, 17) controlled to automatically open during the folding phase of the chassis.

5. Soil working machine according to Claim 3 **characterised in that** the closure devices (16, 17) are positioned in one case (17) on the bypass circuit between the retraction circuit and the folding circuit and in the other case (16) on a bypass line between the delivery line of the retraction cylinder (8) of the central section (3) and the return line to the distributor (21) of the folding circuit.

6. Soil working machine according to Claim 4 **characterised in that**, in the assembly formed by two contiguous sections, one (4) lateral the other (3) central), subject to relative movement, one (4) of the sections (3, 4) is fitted with a member to open/close the closure devices (16, 17) placing the retraction and folding circuits in mutual communication, while the other section (3) is fitted with at least one mechanical member such as an arm (19) or pusher, acting mechanically generally by a pushing or pulling action on said opening/closing members of the closure devices (16, 17) during the relative movement of said sections (3, 4).

7. Soil working machine according to any one of Claims 1 to 6 **characterised in that** the chassis includes at least four lateral sections (4, 5) disposed on either side of the central section (3), the lateral sections (5), termed end sections, being hinged to the lateral sections (4), termed middle sections, which are themselves hinged to the central section (3).

8. Soil working machine according to Claim 7 **characterised in that** the lateral sections (4, 5) and the central section (3) are capable of occupying two principal positions, one a working position wherein the central section (3), the middle lateral sections (4) and the end lateral sections (5) are substantially aligned, the other a space-saver position, in particular for transportation by road, wherein the middle lateral sections (4) and the end lateral sections (5) extend vertically, substantially at right angles to the central section (3).

9. Soil working machine according to Claim 8 **characterised in that** each lateral section (4, 5) is formed from at least one beam-type frame carrying implements (18) offset axially from front-to-rear in the direction of movement of the machine to delineate a plurality of rows of implements (18), said lateral sections (4, 5) being positioned in pairs with their implements facing each other, the beams of the lateral sections on which the tools are facing being separated from each other, when the machine is in the folded position, by a distance greater than the height of an implement but less than twice the height of an implement, the implements of a lateral section being inserted into free spaces separating the implements of the other lateral section facing them.

10. Soil working machine according to Claim 9 **characterised in that** the end lateral sections (5) are positioned with their implements (18) facing each other and overlapping either by being juxtaposed or superimposed when the machine is in the transport position.

11. Soil working machine according to Claim 9 **characterised in that** the end lateral sections (5) and middle lateral sections (4), hinged one on the other, are positioned with their implements facing each other, said implements overlapping either by being juxtaposed or superimposed when the machine is in the transport position.

## Patentansprüche

1. Gezogene Bodenbearbeitungsmaschine (1), insbesondere für die Bearbeitung oder Behandlung großer Grundbreiten, mit einem Werkzeuge (18) tragenden Fahrgestell (2), das von mindestens einem Mittelabschnitt (3) und zwei Seitenabschnitten (4) gebildet ist, wobei die Seitenabschnitte (4) und der Mittelabschnitt (3) gelenkig miteinander verbunden sind, um zwei Hauptpositionen einzunehmen, eine Arbeitsposition, in der der Mittelabschnitt (3) und die Seitenabschnitte (4) im Wesentlichen in gleicher Richtung ausgerichtet sind, und eine andere, Platz sparende Position, insbesondere für die Straßenfahrt, in der sich die Seitenabschnitte (4) vertikal, im Wesentlichen rechtwinklig zu dem Mittelabschnitt (3) erstrecken, wobei die Relativbewegungen der Abschnitte (3, 4) über so genannte Klappzylinder (6) ermöglicht sind, wobei die Abschnitte (3, 4) jeweils mit Rädern (11, 12) ausgerüstet sind, von denen mindestens einige einfahrbar sind, wobei die Räder (11, 12) insbesondere dazu dienen, die Arbeitstiefe der Werkzeuge (18) einzustellen und diese anzuheben, was insbesondere bei den Fahrmanövern im Vorgewende notwendig ist, wobei die Räder (11) des Mittelabschnittes (3) zudem zur Straßenfahrt der Maschine dienen, wobei das Einfahren und Ausfahren der Räder (11, 12) über so genannte Einfahrzylinder (8, 9) steuerbar ist, **dadurch gekennzeichnet, dass** sie einen Einfahrkreislauf, der die Einfahrzylinder (8, 9) speist, und einen Klappkreislauf, der die Klappzylinder (6) speist, umfasst, wobei die Kreisläufe automatisch miteinander verbunden sind, wenn der Seitenabschnitt (4) und der Mittelabschnitt (3) eine Position zueinander einnehmen, die einer Teileinklappung des Fahrgestells (2) entspricht, damit das Öl des Klappkreislaufes in den Einfahrkreislauf läuft, um das Einfahren der Räder (12) der Seitenabschnitte (4) während des Einklappens des Fahrgestells (2) oder ein Ausfahren der Räder (12) der Seitenabschnitte (4) während des Ausklappens des Fahrgestells (2) zu ermöglichen, während die Verbindung zwischen dem Klappkreislauf und dem Einfahrkreislauf in der Arbeitsposition verhindert ist.

2. Bodenbearbeitungsmaschine (1) nach Anspruch 1, **dadurch gekennzeichnet, dass** der Einfahrzylinder (8) der Räder (11) des Mittelabschnittes (3) über eine Verbindung (14), die absperrbar ist, um den Zylinder (8) in den Einklappphasen des Fahrgestells (2) von den anderen Einfahrzylindern (9, 10) zu trennen, mit dem übrigen Kreislauf verbunden ist.

3. Bodenbearbeitungsmaschine nach Anspruch 1, **dadurch gekennzeichnet, dass** die Kreisläufe für ihre Verbindung mindestens ein, vorzugsweise zwei Absperrelemente (16, 17) umfassen, die in Abhängigkeit von der Position der Seitenabschnitte und des Mittelabschnitts zueinander automatisch auf-/zugesteuert werden.

4. Bodenbearbeitungsmaschine (1) nach Anspruch 3, **dadurch gekennzeichnet, dass** die Verbindung der beiden Kreisläufe über Ventile (16, 17) erhalten wird, die in der Einklappphase des Fahrgestells automatisch aufgesteuert werden.

5. Bodenbearbeitungsmaschine nach Anspruch 3, **dadurch gekennzeichnet, dass** von den Absperrelementen (16, 17) das eine (17) in dem Abzweigkreislauf zwischen dem Einfahrkreislauf und dem Klappkreislauf und das andere (16) in einer Abzweigleitung zwischen dem Speiseleitungszweig des Einfahrzylinders (8) des Mittelabschnittes (3) und dem Rücklaufleitungszweig zu dem Verteiler (21) des Klappkreislaufes angeordnet ist.

6. Bodenbearbeitungsmaschine nach Anspruch 4, **dadurch gekennzeichnet, dass** in der Einheit aus zwei angrenzenden Abschnitten, dem Seitenabschnitt (4) und dem Mittelabschnitt (3), die einer Relativbewegung ausgesetzt sind, der eine (4) der Abschnitte (3, 4) mit einem Element zum Öffnen/Schließen der Absperrelemente (16, 17) ausgerüstet ist, die die Verbindung des Einfahrkreislaufes und des Klappkreislaufes untereinander sicherstellen, während der andere Abschnitt (3) mit mindestens einem mechanischen Element wie einem Arm (19), einem Schubelement, ausgerüstet ist, das während der Relativbewegung der Abschnitte (3, 4) mechanisch, im Allgemeinen durch Schub oder Zug, auf die Elemente zum Öffnen/Schließen der Absperrelemente (16, 17) wirkt.

7. Bodenbearbeitungsmaschine nach einem der Ansprüche 1 bis 6, **dadurch gekennzeichnet, dass** das Fahrgestell mindestens vier Seitenabschnitte (4, 5) umfasst, die auf jeder Seite des Mittelabschnittes (3) angeordnet sind, wobei die so genannten äußeren Seitenabschnitte (5) mit den so genannten zentralen Seitenabschnitten (4) gelenkig verbunden sind, wobei die zentralen Seitenabschnitte (4) wiederum mit dem Mittelabschnitt (3) gelenkig verbunden sind.

8. Bodenbearbeitungsmaschine nach Anspruch 7, **dadurch gekennzeichnet, dass** die Seitenabschnitte (4, 5) und der Mittelabschnitt (3) in der Lage sind, zwei Hauptpositionen einzunehmen, eine Arbeitsposition, in der der Mittelabschnitt (3), die zentralen Seitenabschnitte (4) und die äußeren Seitenabschnitte (5) im Wesentlichen in gleicher Richtung ausgerichtet sind, und eine andere, Platz sparende Position, insbesondere für die Straßenfahrt, in der sich die zentralen Seitenabschnitte (4) und die äußeren Seitenabschnitte (5) vertikal, im Wesentlichen rechtwinklig zu dem Mittelabschnitt (3) erstrecken.

9. Bodenbearbeitungsmaschine nach Anspruch 8, **dadurch gekennzeichnet, dass** jeder Seitenabschnitt (4, 5) von mindestens einem Rahmen aus einem oder mehreren Trägern gebildet ist, der Werkzeuge (18), die in Vorwärts-RückwärtsRichtung des Maschinenweges axial versetzt sind, um eine Mehrzahl von Reihen von Werkzeugen (18) zu begrenzen, wobei die Seitenabschnitte (4, 5) paarweise mit ihren sich gegenüber liegenden Werkzeugen angeordnet sind, wobei die Träger der Seitenabschnitte, deren Werkzeuge sich gegenüber liegen, in der eingeklappten Position der Maschine in einem Abstand voneinander entfernt sind, der größer ist als die Höhe eines Werkzeuges, wobei die Werkzeuge eines Seitenabschnittes in die Freiräume eingreifen, die die ihnen gegenüber liegenden Werkzeuge des anderen Seitenabschnittes voneinander trennen.

10. Bodenbearbeitungsmaschine nach Anspruch 9, **dadurch gekennzeichnet, dass** die äußeren Seitenabschnitte (5) so angeordnet sind, dass sich ihre Werkzeuge (18) gegenüber liegen und sich in der Fahrposition der Maschine entweder durch Nebeneinanderanordnung oder durch Übereinanderanordnung überdecken.

11. Bodenbearbeitungsmaschine nach Anspruch 9, **dadurch gekennzeichnet, dass** die äußeren Seitenabschnitte (5) und die zentralen Seitenabschnitte (4), die gelenkig miteinander verbunden sind, so angeordnet sind, dass sich ihre Werkzeuge (18) gegenüber liegen und sich in der Fahrposition der Maschine entweder durch Nebeneinanderanordnung oder durch Übereinanderanordnung überdecken.
